# DEMANDE DE BREVET EUROPEEN

(11) **EP 4 631 781 A1**
(43) Date de publication de la demande: **15.10.2025**
(21) Numéro de dépôt: 25170467.2
(22) Date de dépôt: 14.04.2025
(51) Int. Cl.: B60N 2/24, B60N 2/803, B60N 2/885, B61D 33/00

(54) **EXTENSION D'APPUI-TÊTE POUR UN SIÈGE DE VÉHICULE**

(30) Priorité: 12.04.2024 FR 2403798
(71) Demandeur: SpeedInnov, 75008 Paris (FR)
(72) Inventeur: BERNARD, Alexandre, 17340 CHATELAILLON PLAGE (FR)
(74) Mandataire: Plasseraud IP

(57) **Abrégé**

Extension (10) d'appui-tête pour un siège (20) de véhicule comprenant un dossier (26), un appui-tête et une armature (28) de fixation de l'appui-tête sur le dossier, l'appui-tête possédant une face avant et une face arrière en regard d'une portion supérieure du dossier, l'armature reliant la face arrière à la portion supérieure du dossier, l'extension (10) d'appui-tête comprenant :

- deux éléments de support de tête latéraux (14_{A},14_{B}) espacés suivant un axe transversal (12),

- un ensemble de fixation (16), situé entre les deux éléments de support latéraux, et configuré pour être rapporté sur l'armature en s'insérant entre la face arrière de l'appui-tête et la portion supérieure du dossier.

## Description

La présente invention concerne une extension d'appui-tête pour un siège de véhicule, le siège comprenant un dossier, un appui-tête et une armature de fixation de l'appui-tête sur le dossier, l'appui-tête possédant une face avant et une face arrière, la face arrière étant en regard d'une portion supérieure du dossier, l'armature reliant la face arrière à la portion supérieure du dossier.

La présente invention concerne également un siège de véhicule comprenant un dossier, un appui-tête et une armature de fixation de l'appui-tête sur le dossier, l'appui-tête possédant une face avant et une face arrière, la face arrière étant en regard d'une portion supérieure du dossier, l'armature reliant la face arrière à la portion supérieure du dossier.

Un tel siège est destiné à recevoir un passager en position assise dans un véhicule de transport de passagers.

La présente invention concerne également un véhicule comprenant un siège du type précité sur lequel l'extension d'appui-tête selon l'invention est propre à être rapportée.

Un tel véhicule est notamment un véhicule de transport de passagers correspondant par exemple à un véhicule ferroviaire, un bus, un tramway, un navire, un avion ou tout autre véhicule configuré pour transporter une pluralité de passagers.

Dans le domaine du transport de passagers, notamment ferroviaire, il est connu de ménager un compartiment d'accueil des passagers dans lequel des sièges pour passager sont alignés les uns derrière les autres, le plus souvent parallèlement à une direction de déplacement du véhicule, au moins une partie des sièges étant propres à être en face à face.

Afin d'améliorer le confort des passagers, de tels sièges sont généralement pourvus d'une zone fixe comprenant un appui-tête solidarisée à une portion centrale supérieure du dossier du siège.

Une telle solution ne donne cependant pas entière satisfaction. En effet, les solutions de support de tête actuelles ne sont généralement pas optimales en termes de confort en cas d'endormissement ou de repos du passager, sa tête étant propre à basculer latéralement dans de telles conditions de relâchement.

Un objectif de la présente invention est d'améliorer le confort du siège et le support de la tête du passager. A cet effet, l'invention a pour objet une extension d'appui-tête pour un siège de véhicule, le siège comprenant un dossier, un appui-tête et une armature de fixation de l'appui-tête sur le dossier, l'appui-tête possédant une face avant et une face arrière, la face arrière étant en regard d'une portion supérieure du dossier, l'armature reliant la face arrière à la portion supérieure du dossier, l'extension d'appui-tête comprenant :
- deux éléments de support de tête latéraux espacés suivant un axe transversal, et
- un ensemble de fixation situé entre les deux éléments de support latéraux,

l'ensemble de fixation étant configuré pour être rapporté sur l'armature en s'insérant entre la face arrière de l'appui-tête et la portion supérieure du dossier,
en position rapportée de l'ensemble de fixation sur l'armature, les deux éléments de support de tête latéraux étant situés latéralement de part et d'autre de l'appui-tête et propres à fournir des appuis latéraux à la tête d'un passager.

L'extension d'appui-tête pour un siège de véhicule selon l'invention peut comprendre l'une ou plusieurs des caractéristiques suivantes, prise(s) isolément ou suivant toute combinaison techniquement possible :
- en position rapportée de l'ensemble de fixation, l'axe transversal reliant les deux éléments de support de tête latéraux est configuré pour être mobile en rotation au travers de l'ensemble de fixation ;
- l'axe transversal est configuré pour être mobile en rotation entre deux positions des deux éléments de support latéraux solidaires l'un de l'autre via ledit axe transversal, les deux positions comprenant :
   - une première position dans laquelle les deux éléments de support de tête latéraux sont propres à fournir des appuis latéraux à la tête d'un passager, et
   - une deuxième position dans laquelle les deux éléments de support de tête latéraux sont relevés selon la hauteur par rapport au sol du véhicule excluant la fourniture d'appuis latéraux à la tête d'un passager via lesdits deux éléments de support de tête latéraux ;
- l'ensemble de fixation est un ensemble de fixation par encliquetage et comprend une fente longitudinale selon la direction de l'axe transversal, la fente longitudinale étant propre à coopérer par encliquetage avec une saillie dédiée correspondante s'élevant de l'armature selon la hauteur par rapport au sol du véhicule ;
- l'ensemble de fixation comprend une vis de pression ;
- la vis de pression comprend une empreinte TORX ;
- l'ensemble de fixation est une pièce présentant une longueur selon la direction de l'axe transversal sensiblement égale à 100 mm, une hauteur par rapport au sol du véhicule sensiblement égale à 100 mm et une profondeur selon la direction de déplacement du véhicule de l'ordre de 50 mm ;
- les deux éléments de support de tête latéraux sont identiques et correspondent chacun à un volume délimité par deux faces parallèles ovoides présentant, placées dans ladite première position, une longueur selon la direction de déplacement du véhicule sensiblement égale à 200 mm et une hauteur, par rapport au sol du véhicule, maximale à l'extrémité proximale de l'axe transversal et comprise entre 110 et 130 mm, et une hauteur, par rapport au sol du véhicule, minimale à l'extrémité distale de l'axe transversal et comprise entre 40 et 60 mm.

L'invention a également pour objet un siège de véhicule comprenant un dossier, un appui-tête et une armature de fixation de l'appui-tête sur le dossier, l'appui-tête possédant une face avant et une face arrière, la face arrière étant en regard d'une portion supérieure du dossier, l'armature reliant la face arrière à la portion supérieure du dossier, ladite armature comprenant une saillie dédiée s'élevant de l'armature selon la hauteur par rapport au sol du véhicule, la saillie étant propre à venir en prise avec un ensemble de fixation de l'extension d'appui-tête.

L'invention a également pour objet un véhicule de transport comprenant au moins un siège tel que décrit ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- [Fig 1] la figure 1 est une représentation schématique d'une vue en perspective d'une extension d'appui-tête selon la présente invention pour un siège de véhicule représenté en coupe ;
- **[****Fig 2****]** la figure 2 est une représentation schématique d'une vue en perspective d'un siège sur lequel est rapportée l'extension d'appui-tête selon la présente invention, avec deux positions distinctes d'extension d'appui-tête et la cinématique de mouvement associée selon la présente invention.

Dans la suite de la description, le terme « sensiblement » s'entend comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

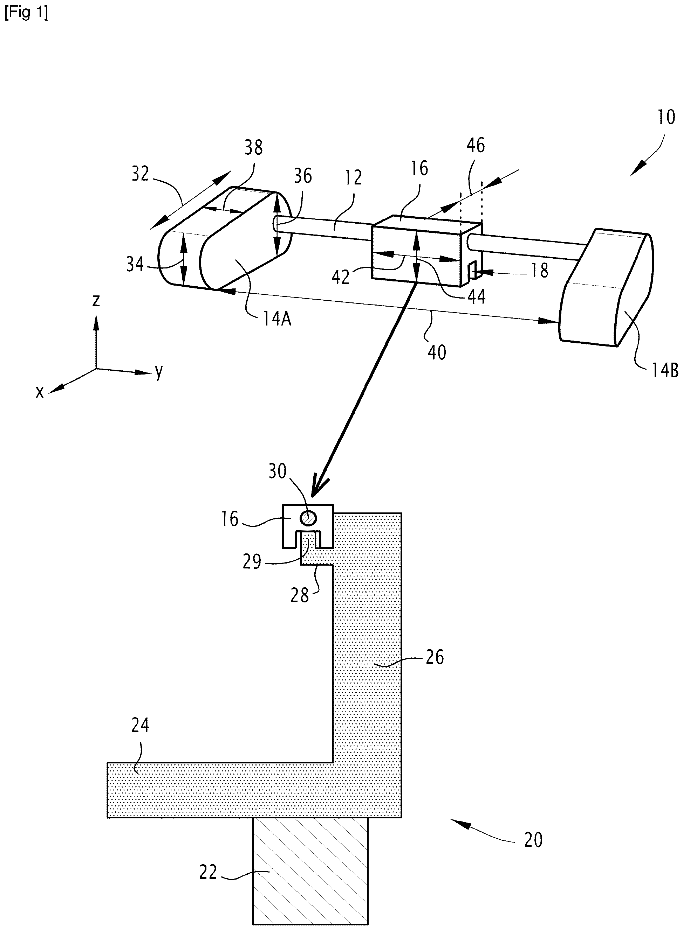

Une extension d'appui-tête 10 est illustrée sur la figure 1 et comprend un axe transversal 12. Deux éléments de support de tête latéraux 14_{A} et 14_{B} sont espacés suivant cet axe transversal 12, et un ensemble de fixation 16 est situé entre les deux éléments de support latéraux 14_{A} et 14_{B}.

Selon la présente invention, l'ensemble de fixation 16 est configuré pour être rapporté sur le siège 20 d'un véhicule, notamment un véhicule de transport de passagers correspondant par exemple à un véhicule ferroviaire, un bus, un tramway, un navire, un avion ou tout autre véhicule configuré pour transporter une pluralité de passagers.

Le siège 20 comprend notamment un pied 22, une assise 24, un dossier 26, un appui-tête, non représenté sur la figure 1, et une armature 28 de fixation de l'appui-tête sur le dossier 26, l'appui-tête possédant une face avant et une face arrière, non représentées sur la figure 1, la face arrière étant en regard d'une portion supérieure du dossier 26, l'armature 28 reliant la face arrière, non représentée, à la portion supérieure du dossier 26.

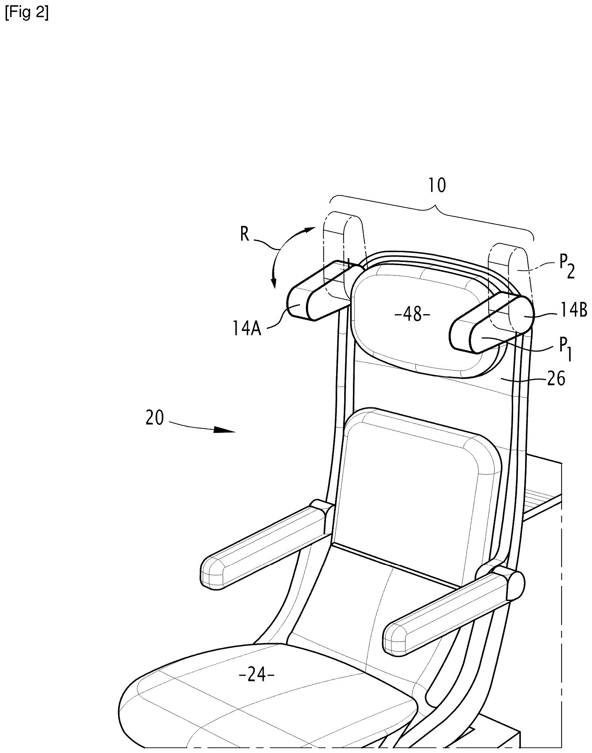

Selon la présente invention, l'ensemble de fixation 16 est configuré pour être rapporté sur l'armature 28 en s'insérant entre la face arrière de l'appui-tête et la portion supérieure du dossier, tel qu'illustré par la suite par la figure 2.

En position rapportée de l'ensemble de fixation 16 sur l'armature 28, les deux éléments de support de tête latéraux 14_{A} et 14_{B} sont situés latéralement de part et d'autre de l'appui-tête et ainsi propres à fournir des appuis latéraux à la tête d'un passager.

En particulier, l'ensemble de fixation 16 est un ensemble de fixation par encliquetage et comprend une fente 18 longitudinale selon la direction de l'axe transversal 12, la fente longitudinale 18 étant propre à coopérer par encliquetage avec une saillie 29 dédiée correspondante s'élevant perpendiculairement de l'armature 28 selon la hauteur, selon l'axe z, par rapport au sol du véhicule.

Autrement dit, par encliquetage, la saillie 29 est propre à venir en prise, tel un élément mâle, avec la fente 18 (telle un élément femelle) de l'ensemble de fixation 16 de l'extension 10 d'appui-tête.

Autrement dit, selon la présente invention, l'extension d'appui-tête 10 se clipse et se déclipse (i.e. est amovible), tel un élément prêt à l'emploi (de l'anglais plug and play) de l'armature située derrière l'appui-tête central pour permettre la fixation réversible de l'extension afin d'améliorer le confort de maintien ergonomique au passager du siège 20, notamment pour apporter un soutien latéral supplémentaire à la tête d'un passager souhaitant dormir sans mouvement latéral du cou pendant son sommeil.

Sur l'exemple de la figure 1, l'ensemble de fixation 16 est localisé au sein d'une zone médiane de l'axe transversal 12, voire sensiblement au milieu de l'axe transversal 12 correspondant par exemple à une tige métallique, notamment en inox.

A titre d'alternative, l'ensemble de fixation 16 n'est pas localisé au sein d'une zone médiane de l'axe transversal 12 mais est localisé plus proche d'un des éléments de support de tête latéraux 14_{A} et 14_{B}.

Avantageusement, la position de l'ensemble de fixation 16 sur l'axe transversal 12 lui permet, une fois rapporté sur l'armature 28 du siège 20, d'être invisible tel qu'illustré par la suite par la figure 2.

Selon un aspect particulier optionnel illustré par la figure 1, l'ensemble de fixation 16 comprend une vis de pression 30, telle que par exemple une vis de pression à bille permettant un clippage (i.e. clipsage) en force.

De plus, selon un aspect complémentaire optionnel, la vis de pression 30 est à tête cruciforme ou comprend une vis spécifique par exemple avec une empreinte TORX rendant le clipsage/déclispage inviolable sans utiliser une clé spécifique associée, ce qui permet de limiter les actes de vandalisme visant à détériorer ou à subtiliser l'extension d'appui-tête selon la présente invention.

En particulier, l'ensemble de fixation 16 est une pièce usinée métallique, par exemple en inox.

En complément facultatif, tel qu'illustré également par la figure 2, en position rapportée de l'ensemble de fixation 16, l'axe transversal 12 reliant les deux éléments de support de tête latéraux 14_{A},14_{B} est configuré pour être mobile en rotation au travers de l'ensemble de fixation 16.

Les deux éléments de support de tête latéraux 14_{A} et 14_{B} sont donc, selon cette variante de réalisation, solidaires l'un de l'autre via l'axe transversal 12 qui lui est mobile en rotation au sein de l'ensemble de fixation 16. Autrement dit, les deux éléments de support de tête latéraux 14_{A} et 14_{B} ne sont pas indépendants l'un de l'autre, l'axe transversal 12 les solidarisant, ce qui permet de les déplaçer simultanément lors de sa mise en rotation.

En complément facultatif, l'axe transversal 12 est configuré pour être mobile en rotation entre deux positions, illustrées par la suite en relation avec la figure 2, des deux éléments de support latéraux solidaires l'un de l'autre via ledit axe transversal 12, les deux positions comprenant :
- une première position dans laquelle les deux éléments de support de tête latéraux sont propres à fournir des appuis latéraux à la tête d'un passager, et
- une deuxième position dans laquelle les deux éléments de support de tête latéraux sont relevés selon la hauteur par rapport au sol du véhicule excluant la fourniture d'appuis latéraux à la tête d'un passager via lesdits deux éléments de support de tête latéraux.

Selon une première variante, ces deux positions sont uniques afin d'offrir une simplicité d'utilisation à l'utilisateur passager qui de fait n'a le choix qu'entre deux positions (i.e. choix binaire) des deux éléments de support de tête latéraux 14_{A} et 14_{B}, à savoir une première position, identique pour les deux éléments de support de tête latéraux 14_{A} et 14_{B} fournissant un support latéral à la tête du passager, et une deuxième position relevée, identique pour les deux éléments de support de tête latéraux 14_{A} et 14_{B} pour augmenter la mobilité du passager s'il souhaite par exemple se pencher latéralement ou se rapprocher latéralement sans entrave d'un autre passager localisé sur un siège adjacent.

Selon une autre variante, des positions supplémentaires des deux éléments de support de tête latéraux 14_{A} et 14_{B} sont activables, telle que par exemple une position abaissée opposée à 180° de la position relevée pour permettre un soutien latéral des épaules du passager.

Selon l'une quelconque de ces variantes, l'extension d'appui-tête selon la présente invention comprend un mécanisme d'arrêt de la rotation de l'axe transversal 12 dans une des positions associées à ces variantes, par exemple un mécanisme d'arrêt comprenant un engrenage de blocage non représenté.

En complément facultatif, les deux éléments de support de tête latéraux 14_{A} et 14_{B} sont identiques et correspondent chacun à un volume délimité par deux faces parallèles ovoides présentant, placées dans ladite première position, une longueur 32 selon la direction de déplacement du véhicule correspondant à la direction de l'axe x, sensiblement égale à 200 mm et une hauteur 36, par rapport au sol du véhicule selon l'axe z, maximale à l'extrémité proximale de l'axe transversal 12 et comprise entre 110 et 130 mm, et une hauteur 34, par rapport au sol du véhicule selon l'axe z, minimale à l'extrémité distale de l'axe transversal et comprise entre 40 et 60 mm.

Une telle forme des deux éléments de support de tête latéraux 14_{A} et 14_{B} permet notamment de limiter le bilan de masse de l'extension d'appui-tête 10 selon la présente invention.

En particulier, les deux éléments de support de tête latéraux 14_{A} et 14_{B} comprennent un matériau en mousse, par exemple une mousse de polyuréthane souple moulée recouvert d'un revêtement textile doux pour améliorer le confort du passager.

Selon un autre aspect particulier, l'axe transversal 12 présente une longueur sensiblement égale à la largeur de dossier 26 du siège 20, par exemple de l'ordre de 400 mm.

Selon un autre aspect particulier complémentaire et facultatif, l'ensemble de fixation 16 est une pièce présentant une longueur 42 selon la direction de l'axe transversal 12, correspondant à la direction de l'axe y de la figure 1, sensiblement égale à 100 mm, une hauteur 44 par rapport au sol du véhicule sensiblement égale à 100 mm et une profondeur 46 selon la direction de déplacement du véhicule de l'ordre de 50 mm.

Un siège 20 de véhicule de transport selon la présente invention est illustré sur la figure 2. Un tel siège 20 est plus particulièrement destiné à équiper notamment un train à grande vitesse ou tout train grandes lignes.

Sur cette figure 2, l'extension d'appui-tête 10 selon la présente invention est rapportée sur le siège 20 de véhicule de sorte que l'ensemble de fixation 16 de la figure 1 est inséré entre la face arrière de l'appui-tête 48 et la portion supérieure du dossier 26, et ce notamment par encliquetage sur l'armature reliant la face arrière de l'appui-tête 48 à la portion supérieure du dossier 26.

Autrement dit, tel qu'illustré sur la figure 2, une fois l'extension d'appui-tête 10 rapportée sur le siège 20, l'axe transversal 12 et l'ensemble de fixation 16 de l'extension d'appui-tête 10 selon la présente invention, sont relativement masqués par l'appui-tête 48 central, et en conséquence avantageusement invisibles d'un point de vue esthétique, seuls les deux éléments de support de tête latéraux 14_{A} et 14_{B} restant visibles.

Comme illustré par la figure 2, l'axe transversal 12 est configuré pour être mobile en rotation R entre au moins deux positions P₁ et P₂ des deux éléments de support latéraux solidaires l'un de l'autre via ledit axe transversal 12, lesdites au moins deux positions P₁ et P₂ comprenant :
- une première position P₁ dans laquelle les deux éléments de support de tête latéraux sont propres à fournir des appuis latéraux à la tête d'un passager, et
- une deuxième position P₂ dans laquelle les deux éléments de support de tête latéraux sont relevés, par rotation, pour être placés selon la hauteur par rapport au sol du véhicule, en excluant la fourniture d'appuis latéraux à la tête d'un passager via lesdits deux éléments de support de tête latéraux 14_{A} et 14_{B}.

Autrement dit, dans la première position P₁, les deux éléments de support de tête latéraux 14_{A} et 14_{B} sont orientés, selon leur longueur 32 représentée sur la figure 1, de manière sensiblement colinéaires (i.e. parallèles) à l'assise 24 du siège 20 et propres à supporter latéralement la tête du passager, alors que dans la deuxième position P₂, obtenue par rotation de l'axe transversal 12 reliant les deux éléments de support de tête latéraux 14_{A} et 14_{B}, les deux éléments de support de tête latéraux 14_{A} et 14_{B} sont orientés, selon leur longueur 32 représentée sur la figure 1, de manière sensiblement colinéaires (i.e. parallèles) au dossier 26 du siège 20.

L'homme du métier comprendra que l'invention ne se limite pas au modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de fournir au sein d'un véhicule une solution de confort passager modulaire, l'extension d'appui-tête pour siège proposée selon la présente invention étant un module amovible permettant de fournir une retenue latérale de la tête du passager notamment lorsque celui-ci souhaite s'assoupir ou se reposer. Le confort global du véhicule de transport équipé d'un siège selon la présente invention est en conséquence amélioré, et ce de manière flexible et modulable par exemple en fonction de la classe de confort souhaitée au sein du véhicule ou d'un compartiment (i.e. zone réservée) du véhicule, notamment une zone comprenant une pluralité de sièges propres à être en face à face.

## Revendications

1. Extension (10) d'appui-tête pour un siège (20) de véhicule, le siège (20) comprenant un dossier (26), un appui-tête (48) et une armature (28) de fixation de l'appui-tête (48) sur le dossier (26), l'appui-tête (48) possédant une face avant et une face arrière, la face arrière étant en regard d'une portion supérieure du dossier (26), l'armature (28) reliant la face arrière à la portion supérieure du dossier (26), **caractérisée en ce que** l'extension (10) d'appui-tête comprend :
- deux éléments de support de tête latéraux (14_{A},14_{B}) espacés suivant un axe transversal (12), et
- un ensemble de fixation (16) situé entre les deux éléments de support latéraux (14_{A},14_{B}), l'ensemble de fixation (16) étant configuré pour être rapporté sur l'armature (28) en s'insérant entre la face arrière de l'appui-tête (48) et la portion supérieure du dossier (26), en position rapportée de l'ensemble de fixation (16) sur l'armature (28), les deux éléments de support de tête latéraux (14_{A},14_{B}) étant situés latéralement de part et d'autre de l'appui-tête (48) et propres à fournir des appuis latéraux à la tête d'un passager.

2. Extension (10) d'appui-tête selon la revendication 1, dans laquelle, en position rapportée de l'ensemble de fixation (16), l'axe transversal (12) reliant les deux éléments de support de tête latéraux (14_{A},14_{B}) est configuré pour être mobile en rotation au travers de l'ensemble de fixation (16).

3. Extension (10) d'appui-tête selon la revendication 2, dans laquelle, l'axe transversal (12) est configuré pour être mobile en rotation entre deux positions (P₁, P₂) des deux éléments de support latéraux solidaires l'un de l'autre via ledit axe transversal, les deux positions comprenant :
- une première position (P₁) dans laquelle les deux éléments de support de tête latéraux sont propres à fournir des appuis latéraux à la tête d'un passager, et
- une deuxième position (P₂) dans laquelle les deux éléments de support de tête latéraux sont relevés selon la hauteur par rapport au sol du véhicule excluant la fourniture d'appuis latéraux à la tête d'un passager via lesdits deux éléments de support de tête latéraux.

4. Extension (10) d'appui-tête selon la revendication 3, dans lequel les deux éléments de support de tête latéraux (14_{A},14_{B}) sont identiques et correspondent chacun à un volume délimité par deux faces parallèles ovoides présentant, placées dans ladite première position, une longueur (32) selon la direction de déplacement du véhicule sensiblement égale à 200 mm et une hauteur (36), par rapport au sol du véhicule, maximale à l'extrémité proximale de l'axe transversal (12) et comprise entre 110 et 130 mm, et une hauteur (34), par rapport au sol du véhicule, minimale à l'extrémité distale de l'axe transversal et comprise entre 40 et 60 mm.

5. Extension (10) d'appui-tête selon l'une quelconque des revendications précédentes, dans lequel l'ensemble de fixation (16) est un ensemble de fixation par encliquetage et comprend une fente (18) longitudinale selon la direction de l'axe transversal (12), la fente longitudinale (18) étant propre à coopérer par encliquetage avec une saillie (29) dédiée correspondante s'élevant de l'armature (28) selon la hauteur par rapport au sol du véhicule.

6. Extension (10) d'appui-tête selon la revendication 5, dans lequel l'ensemble de fixation (16) comprend une vis de pression (30).

7. Extension (16) d'appui-tête selon la revendication 6, dans lequel la vis de pression (30) comprend une empreinte TORX.

8. Extension (10) d'appui-tête selon l'une quelconque des revendications précédentes, dans lequel l'ensemble de fixation (16) est une pièce présentant une longueur (42) selon la direction de l'axe transversal (12) sensiblement égale à 100 mm, une hauteur (44) par rapport au sol du véhicule sensiblement égale à 100 mm et une profondeur (46) selon la direction de déplacement du véhicule de l'ordre de 50 mm.

9. Siège (20) de véhicule comprenant un dossier (26), un appui-tête (48) et une armature (28) de fixation de l'appui-tête (48) sur le dossier (26), l'appui-tête (48) possédant une face avant et une face arrière, la face arrière étant en regard d'une portion supérieure du dossier (26), l'armature (28) reliant la face arrière à la portion supérieure du dossier (26), **caractérisé en ce que** ladite armature (28) comprend une saillie (29) dédiée s'élevant de l'armature (28) selon la hauteur par rapport au sol du véhicule, la saillie (29) étant propre à venir en prise avec un ensemble de fixation (16) de l'extension d'appui-tête selon l'une quelconque des revendications précédentes.

10. Véhicule comprenant au moins un siège (20) selon la revendication 9 sur lequel l'extension (10) d'appui-tête selon l'une quelconque des revendications 1 à 8 est propre à être rapportée.
